# EUROPÄISCHE PATENTANMELDUNG

(11) **EP 1 352 770 A1**
(43) Veröffentlichungstag der Anmeldung: **15.10.2003**
(21) Anmeldenummer: 02450082.9
(22) Anmeldetag: 10.04.2002
(51) Int. Cl.: B60K 17/22, F16C 7/02

(54) **Sicherung für einen Radträger**

(71) Anmelder: Pankl R&D GmbH, 8600 Bruck an der Mur (AT)
(72) Erfinder: Pankl, Gerold, Ing., 8600 Bruck an der Mur (AT)
(74) Vertreter: Patentanwälte BARGER, PISO & PARTNER

(57) **Zusammenfassung**

Die Erfindung betrifft die Sicherung des Radträgers eines angetriebenen Rades eines Kraftfahrzeuges, insbesondere eines Renn- bzw. Sportfahrzeuges am Chassis, wobei die Kraftübertragung des Antriebes von einem chassisseitigen Teil eines inneren Wellengelenks (6) über den wellenseitigen Teil dieses Wellengelenkes, eine Antriebswelle (7), einen wellenseitigen Teil eines äußeren Wellengelenkes (5) und einen radträgerseitigen Teil dieses Wellengelenkes zum Radträger (3) verläuft.

Die Erfindung ist dadurch gekennzeichnet, dass der chassisseitige Teil des inneren Wellengelenkes (6) mit dem radträgerseitigen Teil des äußeren Wellengelenkes (5) unverlierbar verbunden ist.

Diese Verbindung kann dabei über die Antriebswelle oder über ein in ihr geführtes Seil geschaffen werden. Im ersten Fall kann die Antriebswelle in ihrem Stimbereich über Stäbe (8, 11) oder, besonders im Fall eines Tripods, über den Stem, gesichert sein.

## Beschreibung

Die Erfindung betrifft eine Sicherung des Rades bzw. eines Radträgers eines Kraftfahrzeuges, insbesondere eines Renn- bzw. Sportfahrzeuges.

Im Verlauf von Unfällen von Fahrzeugen kommt es immer wieder vor, daß Radträger samt den an ihnen montierten Rädern und gegebenenfalls Bremsen etc. von der Radaufhängung abgerissen werden und sich mit hoher Geschwindigkeit und entsprechender Reichweite vom Wrack entfernen, wodurch sie eine große Gefahr für die Gesundheit und das Leben von Personen bilden, die sich in der Umgebung befinden. Auch ist die Beschädigung von Gegenständen im Umfeld sehr wahrscheinlich.

Diese Gefahr ist insbesondere bei Sportfahrzeugen sehr hoch, bei denen man aus Gründen der Fahreigenschaften der Fahrzeuge (geringe ungefederte Masse) versucht, die Masse der Radaufhängung möglichst gering zu halten. Simultan dazu weisen gerade diese Kraftfahrzeuge, wie insbesondere aus der Formel 1 ersichtlich ist, Reifen auf, die zufolge ihrer Größe ein hohes Gefährdungspotential mit sich bringen. Dazu kommen noch, besonders in der Formel 1, aber auch in den anderen Formeln und selbst im Rallysport, die gefahrenen Geschwindigkeiten, die sich bei ablösenden Reifen und Radträgern nicht nur in deren kinetischer Energie, sondern in deren Massenträgheitsmoment bemerkbar machen.

Besonders akut sind diese Probleme seit auch im Bereich der Radaufhängung mehr und mehr Bauteile nicht mehr aus Metall, sondern aus nicht metallischem Verbundmaterial (gewickelte Kohlefasern, Kevlarfasern u.dgl. mehr) hergestellt werden. Diese Materialien weisen zwar eine höhere Festigkeit als Stahl auf, doch führt eine Überlastung nicht zur plastischen Verformung, sondern zum Bruch, insbesondere zum durchgehenden Sprödbruch, so daß gerade im Falle von Unfällen die Verbindung zwischen dem Chassis und dem Radträger schlagartig verloren geht.

In manchen Bereichen des Motorsports, beispielsweise in der Formel 1, ist man in jüngster Zeit durch eine Regeländerung dazu übergegangen, eine Notverbindung zwischen dem Radträger und dem Chassis zwingend zu verlangen, doch stellt dies im Hinblick auf die Grundsätze des Rennsports nur eine Notlösung dar, da eine solche Sicherheitsleme (zumeist ein Drahtseil) die Schaffung von Befestigungspunkten am Chassis und am Radträger notwendig macht und darüber hinaus die rasche und problemlose Zerlegbarkeit der Radaufhängung beeinträchtigt. Zusätzlich besteht die Gefahr, daß die Sicherheitsleine nicht ordnungsgemäß an beiden Seiten fixiert wird, was nicht nur bedeutet, daß keine Notfixierung des Radträgers besteht, sondern die neue Gefahr schafft, daß die Leine verlorengeht und Personen verletzt oder Gegenstände beschädigt.

Die Erfindung zielt darauf ab, eine Radsicherung zu schaffen, die die genannten Nachteile nicht aufweist, sondern auf einfache Weise, bevorzugt ohne zusätzliche Bauteile oder Montageschritte, im Zuge der Montage der Radaufhängung geschaffen wird und im Zuge der Demontage der Radaufhängung gelöst wird.

Angetriebene Räder weisen eine Antriebswelle auf, die einerends in einem Tripod am Differential oder zumindest differenzialseitig gelagert ist und andernends in einem Tripod des Radträgers gelagert ist. Dabei ist die Antriebswelle in zumindest einem Tripod mit genügend axialem Spiel eingeführt, um die im Zuge des Ein- und Ausfederns und gegebenenfalls der Lenkbewegung auftretenden Längenänderung zwischen den Tripodmitten ausgleichen zu können.
Erfindungsgemäß ist nun vorgesehen, die beiden Tripode, genauer deren radträgerseitigen Teil und deren differenzialseitigen Teil, unverlierbar miteinander zu verbinden, bevorzugt mit der Antriebswelle selbst. Auf diese Weise erfolgt bei der Demontage des Radträgers die Lösung der Sicherung und es wird auch bei der Montage in einem die Sicherung hergestellt, so daß sie keinesfalls vergessen werden kann.

Da darüber hinaus die Antriebswelle selbst zur Übertragung großer Kräfte geschaffen ist und insbesondere bei Rennautos der massivste Einzelteil im Bereich der Radaufhängung ist, kann dieser Bauteil ohne weitere Veränderung, nur durch seine sichere axiale Festlegung am Chassis, sprich Differential, einerseits und am Radträger andererseits, die Sicherungsaufgabe übernehmen.

In einer Variante der Erfindung ist durch die hohle Antriebswelle ein mit seinem chassisseitigen Ende gesichertes, sich mit der Antriebswelle mitdrehendes Stahlseil geführt, das an seinem Ende an der "Außenseite" des Fahrzeuges im Bereich des Radlagers über eine gegebenenfalls lösbare Auszugsicherung verfügt.

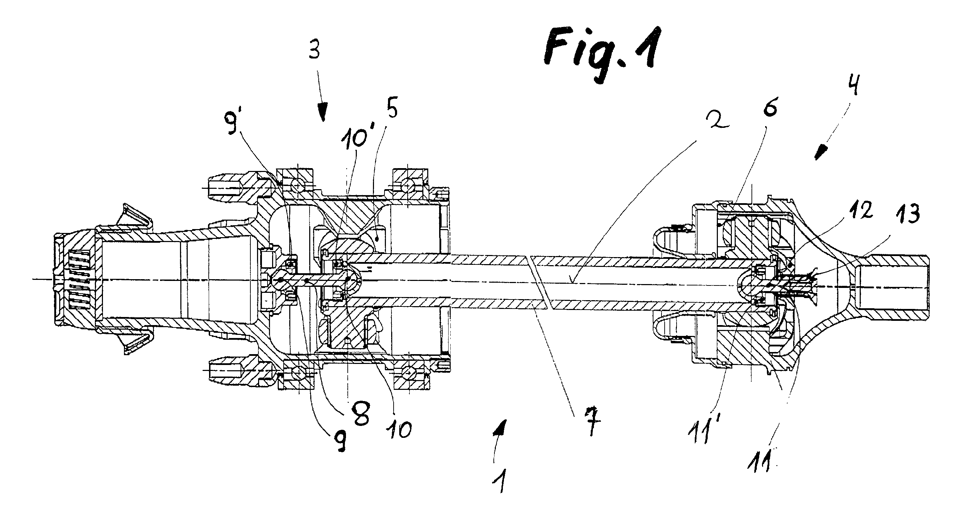

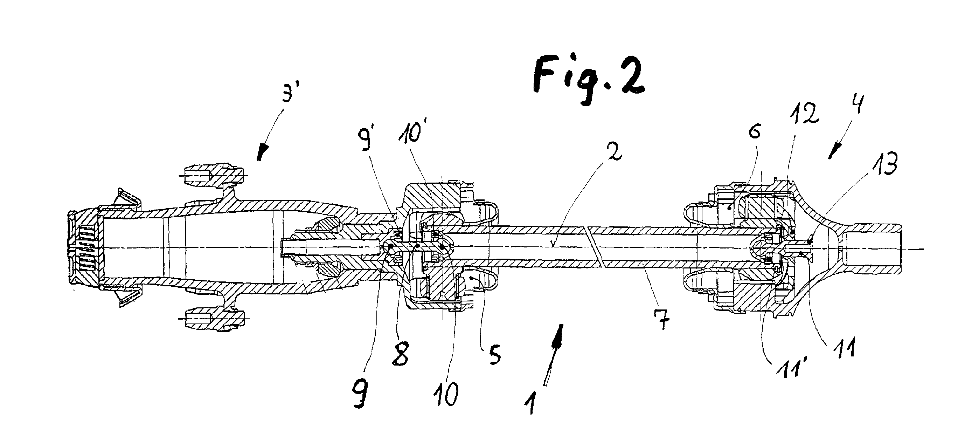

Wenn es ausreichend ist, daß die Antriebswelle nur inklusive Tripod ausgetauscht wird, kann auf die (leichte) Lösbarkeit der Sicherung verzichtet werden und es wird sodann durch die erfindungsgemäße Maßnahme sichergestellt, daß der Radträger samt Felge und Reifen, auch bei vollständigem Bruch der Radaufhängung das Fahrzeugchassis nicht verlassen kann. Da bei Rennautos zumeist der Antriebsstrang vom Differential weg in einem ausgetauscht wird, ist diese letztgenannte Lösung die bevorzugte und wird im folgenden an Hand der Zeichnung näher erläutert. Dabei zeigt
die Fig. 1 einen Schnitt durch eine erfindungsgemäß ausgebildete Halbachse und die Fig. 2 eine Variante der Fig. 1.

Die Fig. 1 zeigt im Schnitt durch die Drehachse 2 eine in ihrer Gesamtheit mit 1 bezeichnete Halbachse in gestrecktem Zustand. Die Halbachse trägt einen Radträger 3 an ihrem einen Ende und ein Verbindungsstück 4 zu einem Getriebe oder Differential an ihrem anderen Ende. Mit dem Radträger 3 bzw, dem Verbindungsstück 4 ist sie mittels jeweils eines Tripods 5, 6 verbunden. Aus Gründen der Übersichtlichkeit ist die eigentliche Radaufhängung, die vom Chassis des Fahrzeuges auf der rechten Seite der Darstellung der Fig. 1 zum Radträger 3 führt und diesen hält und führt, nicht eingezeichnet. Im Zuge der Bewegungen des Radträgers 3 bezüglich des bis auf die Rotationen der Achse 2 ortsfesten Verbindungsstückes 4 und, wenn es sich um eine gelenkte Achse handelt, zufolge der Lenkbewegung, kommt es zu einer Änderung des Abstandes zwischen den Mittelpunkten der beiden Tripode 5, 6.

Um bei dieser Längenänderung die Lage der Antriebswelle 7 nicht aus dem zulässigen Bereich gelangen zu lassen, ist es im Stand der Technik, am besten repräsentiert durch die EP 0 968 867 A1 der Anmelderin, bekannt, die Halbachse 7 von einer Seite her, bevorzugt von der Seite des Differentials, somit des Verbindungsstückes 4, mittels einer Druckfeder so zu beaufschlagen, daß sie mit ihrem anderen Ende gegen einen entsprechenden Anschlag gedrückt wird und so eine stets definierte Lage einnimmt. Ein Teil dieser vorbekannten Konstruktion ist beim dargestellten Ausführungsbeispiel der Erfindung durch den Druckstab 8 repräsentiert. Dazu muß gesagt werden, dass die Benennung "Druckstab" eher historische als technische Berechtigung hat, da bei der Konstruktion gemäß der obigen Druckschrift dieser Bauteil tatsächlich durch die Feder am anderen Ende der Antriebswelle ständig auf Druck belastet, während er bei der erfindungsgemäßen Konstruktion mit gleicher Häufigkeit auf Druck bzw. auf Zug belastet ist.
Der Druckstab 8 weist an beiden Enden auf bekannte Weise kugelige Verdickungen 9, 10 auf, die in entsprechenden Aufnahmen oder Gegenlagern einerseits des Radlagers 3, andererseits der Antriebswelle 7, ruhen.

Am anderen Ende der Antriebswelle 7 ist erfindungsgemäß eine ähnliche Vorrichtung vorgesehen, wobei allerdings statt eines Druckstabes ein Haltestab 11 vorgesehen ist, der mit einem, ebenfalls kugelig ausgebildeten Ende in einer Aufnahme der Antriebswelle 7 sitzt, mit seinem anderen Ende aber mit Überlänge durch eine Ausnehmung 12 der Aufnahme 4 ragt und am Ende der Überlänge eine Verdickung 13 aufweist.

Erfindungsgemäß ist nun der Druckstab 8 mittels Sicherungsringen 9', 10' in seiner Lage bezüglich seiner Aufnahmen im Radträger 3 einerseits und der Antriebswelle 7 andererseits fixiert, so daß, mit Ausnahme der geringen Verschiebung der Antriebswelle 7 bezüglich des Zentrums des Tripods 5 bei Schrägstellungen, denen der Druckstab 8 nicht oder nur teilweise folgt, der Radträger bezüglich der Antriebswelle fixiert ist.

Das andere, fahrzeugseitige, Ende der Antriebswelle 7 wird durch den Haltestab 11 und eine zugehörig Sicherung 11' um die Überlänge des Haltestabes 11 verschieblich im Verbindungsstück 4 gehalten, so daß die Funktionsweise der Kraftübertragung auch bei Lageund Richtungsändcrung des Radträgers bezüglich des Verbindungsstückes nicht beeinträchtigt wird.

Kommt es jedoch zum Reißen oder Brechen der Radaufhängung, so bleibt der Radträger 3 über den Druckstab 8, die Antriebswelle 7 und den Haltestab 11 mit dem Verbindungsstück 4 verbunden. Die Sicherungen 9', 10' und 11', durch die die Verbindungselemente dieser dynamischen Kette zusammengehalten werden, sind beispielsweise Seegerringe oder andere als Wellen- oder Lagersicherungen gebrauchte Maschinenelemcnte, die in Kenntnis der Erfindung vom Fachmann leicht ausgewählt und dimensioniert werden können.

Die Fig. 2 zeigt eine völlig analog aufgebaute Variante, bei der nur der Radträger 3' anders ausgebildet ist als der Radträger 3, die anderen Bauteile weisen die gleiche Funktionsweise und den gleichen Aufbau auf.

Es ist aus der Darstellung und aus den Erläuterungen leicht ersichtlich, daß auch darauf verzichtet werden kann, die eventuell notwendige Haltekraft zwischen den beiden äußeren Tripodteilen über die Antriebswelle 7 zu führen, so ist es möglich, den Druckstab 8 und den Haltestab 11 hohl auszubilden und, wie Perlen auf einer Schnur, auf einem passenden Seil zu fixieren, um eine Sicherung auch für den Fall zu erreichen, daß die Antriebswelle 7, wie verschiedentlich schon geschehen, zum Sprödbruch neigt. Selbstverständlich sind in diesem Fall die Gegenlager für die Verdickungen der Stäbe 8, 11, in der Antriebswelle 7 ebenfalls mit einer zentralen Öffnung zu versehen, um den Durchtritt des Seiles zu erlauben.

In einer Ausgestaltung dieser Variante mit einem Seil ist es selbstverständlich auch möglich, auf den Druckstab 8 und den Haltestab 11 zu verzichten und statt dessen nur das Seil vorzusehen, auf dem vier Kugeln (oder vier zumindest in Teilbereichen sphärische Flächen aufweisende Gebilde) befestigt, beispielsweise aufgelötet sind.

Wenn die Verbindung zwischen dem wellenseitigen Tripodelement (dem Stern) und der Welle in axialer Richtung stabil genug ist, beispielsweise bei einstückiger Ausbildung der Welle mit den Achsstummeln für die Wälzkörper des Tripods, ist es auch möglich, an den äußeren Tripodelementen (der Glocke) am offenen Ende kreisbogenförmige Haltescheiben oder Halteelemente vorzusehen, durch die verhindert wird, daß der Stern in Längsrichtung aus der Glocke gezogen wird. Bei dieser Ausführungsform wird selbstverständlich zwangsläufig die eventuell benötigte Haltekraft über die Antriebswelle 7 übertragen.

Es kommt letzten Endes darauf an, den chassisseitigen Teil des inneren Wellengelenkes unverlierbar mit dem radträgerseitigen Teil des äußeren Wellengelenkes zu verbinden. Unter unverlierbar wird im Sinne der Erfindung verstanden, dass bis zu einer vorgcgebenen Auszugskraft keine Trennung bzw. Bruch eintritt.

Es hat bei der Beurteilung der Erfindung stets bedacht zu werden, daß während des ordnungsgemäßen Betriebes die Haltevorrichtung so gut, wie keinen Kräften ausgesetzt ist. So ist bei der dargestellten Ausführungsform nur der Druckstab 8 beansprucht, und auch dies nur während der Änderung der Einfederung bzw. der Änderung des Einschlages im Falle eines gelenkten Rades. Selbst in diesem Fall ist die einzige Kraft, die er zu übertragen hat, eine geringfügige Verschiebebewegung der Antriebswelle 7 und ihrer beiden Sterne bezüglich zumindest einer Glocke der beiden Tripode. Wenn man von den extrem seltenen Fällen der Einfederung bei stillstehendem Fahrzeug bzw. bei Betätigung der Lenkung bei stillstehendem Fahrzeug absieht, erfolgt diese Verschiebung immer während der Rotation der gesamten dargestellten Vorrichtung um die Achse 2, so daß nur geringe Gleitreibung auftritt und nur die Massenkräfte der Antriebswelle 7 samt der beiden Sterne zu überwinden sind. Es kann somit die Sicherungsvorrichtung ausschließlich auf den Fall ihres Einsatzes dimensioniert und ausgelegt werden, da bis zu ihrer Aktivierung keine nennenswerte Belastung, Beeinträchtigung oder Abnutzung erfolgen kann.

Die Erfindung ist selbstverständlich nicht auf das dargestellte Beispiel einer Halbachse eines extremen Rennfahrzeuges beschränkt, sondern kann bei allen Sportfahrzeugen günstig eingesetzt werden. Dabei ist auch nicht die Verwendung von Tripoden eine unabdingbare Voraussetzung zur Anwendung der erfindungsgemäßen Kennzeichnungsmerkmale, auch bei Verwendung eines sogenannten "constant velocity" Gelenks bzw. bei Verwendung zweier derartiger Gelenke, können, wie auch bei Verwendung anderer Wellengelenke, die erfindungsgemäßen Maßnahmen eingesetzt werden.

Für den Fachmann auf dem Gebiete der Konzeption, Auslegung und Herstellung von Radaufhängungen, Lenkungen und Antrieben auf dem Gebiete der Sport- und Rennwagen ist es in Kenntnis der Erfindung ein Leichtes, die entsprechenden Adaptionen an einer vorgegebenen Radaufhängung bzw. Halbachse vorzunehmen, um sie erfindungsgemäß auszubilden. Dies gilt insbesondere für die Berechnung der notwendigen Abmessungen und Wandstärken, um eine vorgegebene Haltekraft zu erreichen und für die dabei verwendbaren Materialien und Bearbeitungsverfahren.

## Patentansprüche

1. Sicherung des Radträgers eines angetriebenen Rades eines Kraftfahrzeuges, insbesondere eines Renn- bzw. Sportfahrzeuges am Chassis, wobei die Kraftübertragung des Antriebes von einem chassisseitigen Teil eines inneren Wellengelenks (6) über den wellenseitigen Teil dieses Wellengelenkes, eine Antriebswelle (7), einen wellenseitigen Teil eines äußeren Wellengelenkes (5) und einen radträgerseitigen Teil dieses Wellengelenkes zum Radträger (3) verläuft, **dadurch gekennzeichnet, dass** der chassisseitige Teil des inneren Wellengelenkes (6) mit dem radträgerseitigen Teil des äußeren Wellengelenkes (5) unverlierbar verbunden ist.

2. Sicherung nach Anspruch 1, **dadurch gekennzeichnet, dass** die Verbindung durch einen Druckstab (8) und einen Haltestab (11) geschaffen wird, dass einer der Stäbe (8, 11) den chassisseitige Teil des inneren Wellengelenkes (6) mit der Antriebswelle (7) und der andere Stab (11, 8) die Antriebswelle (7) mit dem radträgerseitigen Teil des äußeren Wellengelenkes (5) verbindet, und dass zumindest einer der Stäbe (8, 11) ein axiales Spiel der beiden durch ihn verbundenen Teile erlaubt.

3. Sicherung nach Anspruch 1, **dadurch gekennzeichnet, dass** ein durch die hohl ausgebildete Antriebswelle (7) geführtes Seil cinerseits mit dem chassisseitige Teil des inneren Wellengelenkes (6) und andererseits mit dem radträgerseitigen Teil des äußeren Wellengelenkes (5) verbunden ist.

4. Sicherung nach Anspruch 3, **dadurch gekennzeichnet, dass** das Seil Anschläge, Vcrdikkungen od.dergl. zur Positionierung der Antriebswelle (7) bezüglich der Wellengelenke (5, 6) trägt.

5. Sicherung nach Anspruch 1, **dadurch gekennzeichnet, dass** am wellenseitigen Ende des chassisseitige Teiles des inneren Wcllengelenkes (6) und am wellenseitigen Ende des radträgerseitigen Teiles des äußeren Wellengelenkes (5) Anschläge, bevorzugt in Form von Stimplatten, angebracht sind, die das axiale Verschieben der Antriebswelle (7) bezüglich des jeweiligen Wellengelenkes (5, 6) begrenzen.
